# EUROPÄISCHE PATENTSCHRIFT

(11) **EP 0 657 095 B1**
(45) Veröffentlichungstag und Bekanntmachung des Hinweises auf die Patenterteilung: **26.08.1998**
(21) Anmeldenummer: 94118261.0
(22) Anmeldetag: 19.11.1994
(51) Int. Cl.: A01F 12/40

(54) **Mähdrescher mit Strohhäcksler**
Combine with a straw chopper
Moissonneuse batteuse équipée d'un hache-paille

(30) Priorität: 08.12.1993 DE 4341764
(43) Veröffentlichungstag der Anmeldung: 14.06.1995
(73) Patentinhaber: CLAAS Kommanditgesellschaft auf Aktien, 33428 Harsewinkel (DE)
(72) Erfinder: Niermann, Martin, D-33428 Harsewinkel (DE)

(56) Entgegenhaltungen:
- EP-A- 0 212 269
- DE-A- 2 047 023
- DE-A- 3 119 954
- DE-A- 3 826 066
- FR-A- 1 073 507
- GB-A- 2 165 732
- US-A- 3 712 309

## Beschreibung

Die Erfindung bezieht sich auf einen Mähdrescher mit einem, einer Dresch- und Abscheideeinrichtung nachgeschalteten Strohhäcksler, welcher an der Strohhaube über ein Bewegungsorgan in eine Arbeitsstellung und in eine Außerbetriebsstellung verlagerbar ist gemäß dem Oberbegriff des Anspruchs 1.

Aus der DE-OS 31 19 954 und der DE-PS 2 047 023 ist es bekannt geworden, einen an der Strohhaube angebrachten Strohhäcksler über einen Druckmittelzylinder um eine horizontale Achse in eine Betriebsstellung und in eine Außerbetriebsstellung zu verschwenken.

Die Europäische Patentanmeldung 0 224 803 offenbart einen Mähdrescher mit im Bereich des Auslaufendes der Strohhaube mittels Zahnrad und Zahnstange verschiebbar gelagerten Häcksler, der ebenfalls in seine beiden Stellungen verlagerbar ist. Die DE-OS 38 26 066 zeigt einen schwenkbar am Mähdrescher gelagerten Strohhäcksler, welcher von Hand über Hebel in die beiden Stellungen verschwenkbar ist.

Dieser Stand der Technik offenbart nur die verschwenkbare oder verschiebbare Ausbildung des Strohhäckslers in seine Häckselstellung bzw. seine Außerbetriebsstellung und gibt keinen Hinweis auf weitere Maßnahmen für das Schwadenablegen des Strohs auf den Acker bzw. das Strohhäckseln.

Aufgabe der Erfindung ist es, einen an die Strohhaube des Mähdreschers angebauten Strohhäcksler in einfacher und mechanischer Weise in seine Arbeitsstellung und seine Außerbetriebsstellung zu verlagern und dabei zwangsläufig und automatisch den Auswurfstutzen des Strohhäckslers und/oder einen Strohleitrechen in die Betriebs- und Außerbetriebsstellung zu bringen.

Diese Aufgabe wird erfindungsgemäß durch die kennzeichnenden Merkmale des Patentanspruches 1 gelöst.

Die sich an den Patentanspruch anschließenden Unteransprüche beinhalten Gestaltungsmerkmale, welche vorteilhafte und förderliche Weiterbildungen der Aufgabenlösung darstellen.

Der Mähdrescher ist erfindungsgemäß mit einem an Führungen der Strohhaube verschiebbar gelagerten Strohhäcksler ausgestattet, welcher durch einen Druckmittelzylinder in seine Arbeitsstellung und seine Außerfunktionsstellung bringbar ist.

In Abhängigkeit der Verschiebebewegung des Strohhäckslers wird gleichzeitig, zwangsläufig und automatisch der Auswurfstutzen des Strohhäckslers und/oder der Strohleitrechen und/oder ein Strohleitblech in die Betriebs- und Außerbetriebsstellung gebracht, wobei hierfür einfache Kopplungsglieder vorhanden sind, die in Abhängigkeit voneinander diese Bewegungen durchführen.

Hierdurch hat der Strohhäcksler eine verbesserte Arbeitsweise und einen gesteigerten Gebrauchswert erhalten, da lediglich durch ein Betätigungsorgan mehrere Funktionen für die gesamte Arbeitsweise des Strohhäckslers bzw. seine Außerbetriebsstellung erreicht wird.

Anhand der Zeichnungen wird ein Ausführungsbeispiel der Erfindung nachfolgend näher erläutert. Es zeigt:
- Fig. 1: eine schematische Seitenansicht eines Mähdreschers mit unter der Strohhaube in zwei Funktionsstellungen verschiebbar gelagertem Strohhäcksler,
- Fig. 2: eine Seitenansicht des Strohäckslers in der in die Häckselstellung verschobenen Anordnung,
- Fig. 3: eine Seitenansicht des Strohäckslers in der in die Außerbetriebsstellung verschobenen Lage,
- Fig. 4: eine Seitenansicht der Kopplungsglieder für die Verschiebung des Strohhäckslers, Verschwenkung des Auswurfstutzens, Verschwenkung des Strohleitrechens und Verschwenkung des Strohleitbleches in der Häckselstellung des Strohhäckslers,
- Fig. 5: einen Querschnitt durch den Strohleitrechen gemäß Schnittlinie I-I in Fig. 4 mit zusammenwirkenden Anschlag- und Steuermitteln.

Der Mähdrescher (M) besitzt einen einer Dresch- und Abscheideeinrichtung (1) nachgeschalteten Strohhäcksler (2), welcher an der Strohhaube (3) über ein Bewegungsorgan (4) in eine Arbeitsstellung (A) und in eine Außerbetriebsstellung (B) verlagerbar ist.

Der Strohhäcksler (2) ist mittels Führungen (5, 6) unter der Strohhaube (3) verschiebbar und mittels des Bewegungsorganes (4), vorzugsweise einem Druckmittelzylinder, in seine beiden Stellungen verfahrbar gelagert.

Der Auswurfstutzen (7) des Strohhäckslers (2) und/oder ein am Strohhäcksler (2) angeordneter Strohleitrechen (8) ist/sind in Abhängigkeit von der Verschiebebewegung des Strohhäckslers (2) über Kopplungsglieder (9 bis 13) in eine Arbeitsstellung (A) und in eine Außerbetriebsstellung (B) verschwenkbar.

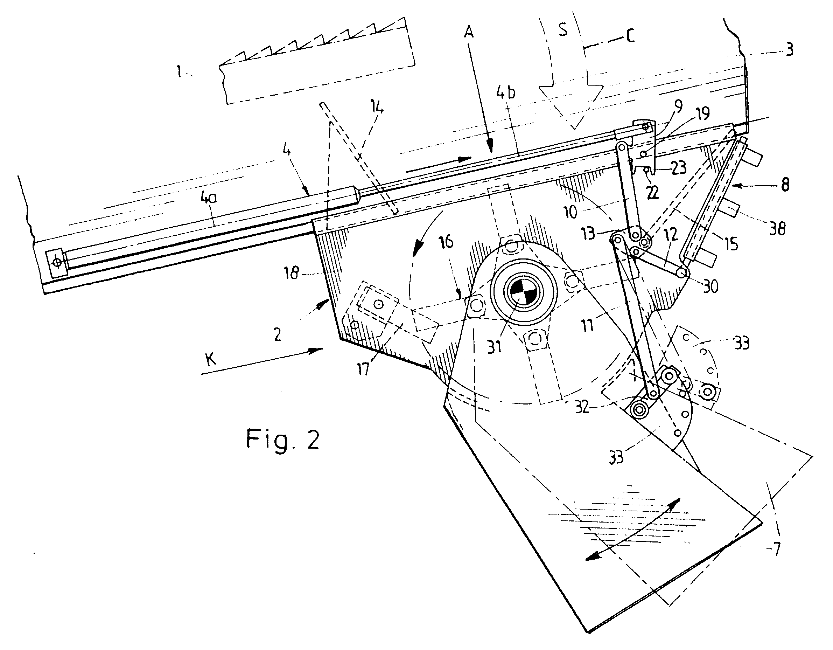

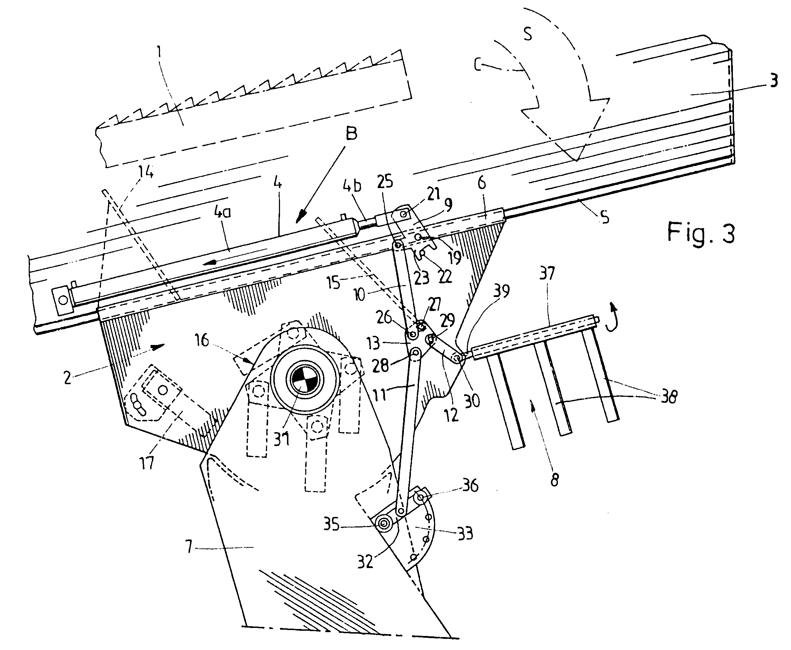

Der Strohhäcksler (2) weist ein feststehendes Strohleitblech (14) und ein in Abhängigkeit von der Verschiebebewegung des Strohhäckslers (2) über die Kopplungsglieder (9 bis 13) in eine Stroh-Einlaufstellung (Fig. 2) und in eine Strohableitstellung (Fig. 3) verschwenkbares Strohleitblech (15) auf.

Der Strohhäcksler (2) ist mit seinem den Schneidrotor (16) und Gegenmesser (17) aufnehmenden Gehäuse (18) mit Profilschienen (6), vorzugsweise U-Schienen, unter der Strohhaube (3) verschiebbar gelagert.

Der als doppelseitig beaufschlagbarer Druck-Zugzylinder ausgebildete Druckmittelzylinder (4) lagert mit seinem Zylindergehäuse (4a) an der Strohhaube (3) und seine Kolbenstange (4b) greift am hinteren Ende des Strohhäckslergehäuses (18) mittelbar an.

Die Kolbenstange (4b) des Druckmittelzylinders (4) ist an einem um eine horizontale Achse (19) am Strohhäckslergehäuse (18) begrenzt schwenkbaren Steuer- und Mitnahmeteil (9) angelenkt, welches die Steuerung der Kopplungsglieder (10 bis 13) und die Verschiebung des Strohhäckslers (2) bewirkt.

Das Steuer- und Schwenkteil (9) ist als mehrarmiger Hebel ausgebildet und lagert um die an der Profilschiene (6) des Strohhäckslergehäuses (18) ortsfest vorgesehene Achse (19) schwenkbar; einerseits der Achse (19) hat das Steuer- und Schwenkteil (9) ein Gabelteil (20) zur Gelenkverbindung der Kolbenstange (4b) des Druckmittelzylinders (4) in der horizontalen Achse (21) und andererseits der Achse (19) zeigt und Steuer- und Schwenkteil (9) eine mit einem Anschlag (22) am Strohhäckslergehäuse (18) in zwei Schwenkstellungen zusammenwirkende Schwenkbegrenzungs- und Mitnahmegabel (23).

Das Steuer- und Schwenkteil (9) besitzt einen in Längsrichtung des Druckmittelzylinders abgehenden, hebelförmigen Fortsatz (24), an dem ein erster Hebel (10) mit einem Ende in einer horizontalen Schwenkachse (25) angelenkt ist, der mit seinem anderen Ende über eine horizontale Achse (26) mit einer um eine ortsfeste, horizontale Achse (27) am Strohhäckslergehäuse (18) schwenkbar gelagerten Knotenplatte (13) in Gelenkverbindung steht.

An der Knotenplatte (13) ist ein zweiter Hebel (11) mit einem Ende in einer horizontalen Achse (28) angelenkt, der mit seinem anderen Ende verstellbar am Auswurfstutzen (7) angreift.

An der Knotenplatte (13) lagert in einer horizontalen Achse (29) ein dritter Hebel (12) mit einem Ende schwenkbar, welcher in seinem anderen Ende eine im Strohhäckslergehäuse (18) drehbar gelagerte Welle (30) aufweist, an der der Strohleitrechen (8) bewegungsstarr befestigt ist.

Das schwenkbare Strohleitblech (15) ist an der schwenkbaren Knotenplatte (13) befestigt und mit dieser um die horizontale Achse (27) verschwenkbar.

Der Auswurfstutzen (7) lagert um die Rotor-Drehachse (31) schwenkbar und sein ihn bewegender Hebel (11) ist an einem Stellhebel (32) angelenkt, welcher an einem am Auswurfstutzen (7) befestigten Lochrasterteil (33) für die Schwenkwinkelgröße des Auswurfstutzens (7) einstellbar festgelegt ist.

Der Hebel (11) steht über eine horizontale Achse (34) mit dem Stellhebel (32) in Verbindung, der wiederum mit einem Ende in einer horizontalen Achse (35) am Lochrasterteil (33) verschwenkbar und mit seinem anderen Ende durch ein Steckteil (36), Rastteil o. dgl. in den Löchern (33a) des Lochrasterteiles (33) wahlweise festlegbar ist und somit die Schwenkgröße des Auswurfstutzens (7) bestimmt.

Die ortsfeste Achse (27) der Knotenplatte (13) liegt mit den Achsen (26 bis 29) der drei Hebel (10, 11, 12) auf den Eckpunkten eines Viereckes, vorzugsweise eines Trapezes.

Der Strohleitrechen (8) weist ein Rohr (37) mit Zinken (38) auf und dieses Rohr (37) ist um eine an der Welle (30) befestigten Stange (39) in einem begrenzten Winkel verdrehbar gelagert. Das Rohr (37) mit Zinken (38) wird durch ein am Strohhäckslergehäuse (18) befestigtes Steuerstück (40) und einen am Rohr (37) angebrachten Anschlag (41) beim Hochschwenken des Strohleitrechens (8) um die Stange (39) zur Mähdreschermitte hin eingeschwenkt.

An beiden Seiten des Strohhäckslers (2) ist je ein Strohleitrechen (8) angeordnet und beide Strohleitrechen (8) sind an einer gemeinsamen, durchgehenden Welle (30) befestigt und durch je einen mit einem Steuerstück (40) zusammenwirkenden Anschlag (41) aufeinanderzu einschwenkbar.

Die von der Knotenplatte (13), den drei Hebeln (10 bis 12) und dem Steuer- und Schwenkteil (9) gebildeten Kopplungsglieder sind mindestens an einer Seite des Strohäckslers (2) angeordnet und durch den Druckmittelzylinder (4) betätigbar.

In Fig. 3 ist der Strohhäcksler (2) in seine Außerbetriebsstellung (B) zurückgefahren und die Strohleitrechen (8) sind von der Strohhaube (3) und dem Häcksler (2) weggeschwenkt und um ihre Stangen (39) aufgrund ihres Eigengewichtes mit den Zinken (38) nach unten geschwenkt, so daß beide seitlichen Strohleitrechen (8) zwischen ihren Zinken (38) einen Begrenzungsraum für das Stroh (S) bilden.

Das Stroh (S) kann nun aus dem Auslaufende der Strohhaube (3) in Pfeilrichtung "C" heraus und zwischen den Strohleitblechen (8) hindurch ungehäckselt auf den Acker fallen.

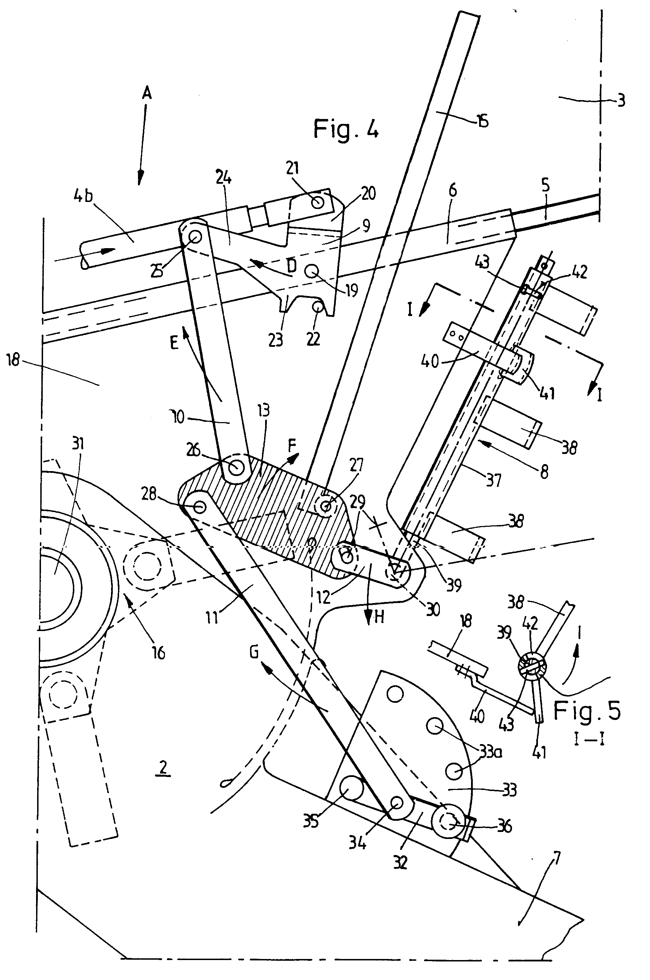

In Fig. 2 und 4 ist der Häcksler (2) in seine Arbeitsstellung gefahren worden, wobei durch Ausfahren der Kolbenstange (4b) das Strohäckslergehäuse (18) an den Führungen (5, 6) bis unter das Auslaufende der Strohhaube (3) verschoben worden ist.

Beim Ausfahren der Kolbenstange (4b) wird zuerst das Steuer- und Schwenkteil (9) um seine ortsfeste Achse (19) in Pfeilrichtung "D" verschwenkt, wobei über den hebelförmigen Fortsatz (24) der erste Hebel (10) in Pfeilrichtung "E" nach oben gezogen, dadurch die Knotenplatte (13) um ihre ortsfeste Achse (27) in Pfeilrichtung "F" verschwenkt und damit der Hebel (11) in Pfeilrichtung "G" und der Hebel (12) in Pfeilrichtung "H" verschwenkt wird, wodurch der Auswurfstutzen (7) um die Rotorachse (31) in seine Auswurfstellung geschwenkt und der Strohleitrechen (8) mit der Welle (30) nach oben an das Strohhäckslergehäuse (18) herangeschwenkt wird. Sobald der Anschlag (41) des Strohleitrechens (8) gegen das Steuerstück (40) anschlägt, wird das Rohr (37) mit Zinken (38) und die Stange (39) verdreht und die Zinken (38) schwenken nach innen in Pfeilrichtung "I" ein. Beim Verschwenken der Knotenplatte (13) um ihre ortsfeste Welle (27) wird das mit der Knotenplatte (13) bewegungsstarr verbundene Strohleitblech (15) nach außen (hinten) verschwenkt und bildet dann mit dem festen Strohleitblech (14) einen Einlauftrichter für das Stroh (S) (vgl. Fig. 2). Das Stroh (S) fällt dann von der Dresch- und Abschneideeinrichtung (1) in Pfeilrichtung "C" in den von den Leitblechen (14, 15) gebildeten Trichter und wird im Häcksler (2) gehäckselt und aus dem Auswurfstutzen (7) ausgetragen.

In Fig. 4 sind die Bewegungen der Kopplungsglieder (9 bis 13) durch die Pfeilangaben verdeutlicht, und der Strohleitrechen (8) ist hoch- und eingeschwenkt, wobei Fig. 5 in der Pfeilangabe "I" das Einschwenken der Zinken (38) zeigt.

Beim Ausfahren der Kolbenstange (4b) wird das Steuer- und Schwenkteil (9) nur um einen begrenzten Winkel verschwenkt und zwar soweit, bis die Mitnahmegabel (23) mit ihrem einen Gabelteil gegen den Anschlag (22) stößt (Fig. 4) - in diesem Schwenkwinkelbereich erfolgt die Betätigung der Kopplungsglieder (10 bis 13).

Beim weiteren Anfahren der Kolbenstange (4b) wird dann über den Kraftschluß zwischen Mitnahmegabel (23) und Anschlag (22) der Strohhäcksler (2) in Pfeilrichtung "K" in die Arbeitsstellung "A" verschoben (Fig. 2 und 4).

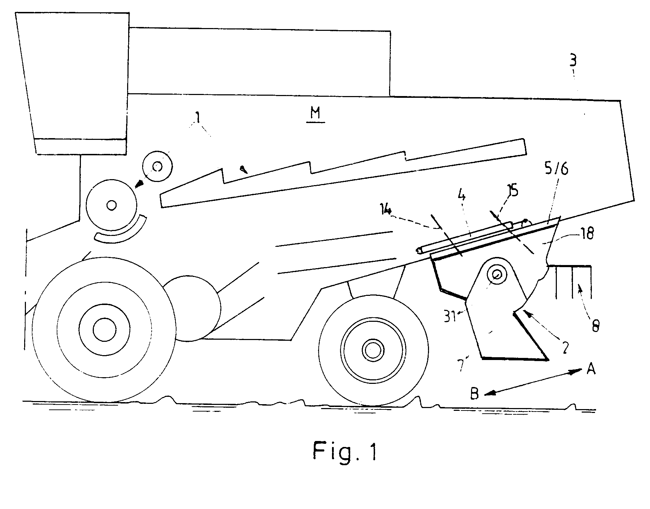

Beim Einfahren der Kolbenstange (4b) erfolgen dann die gleichen Bewegungen sinngemäß umgekehrt und der Strohhäcksler (2) wird in die Außerbetriebsstellung nach Fig. 3 verfahren, wobei das Strohleitblech (15) einschwenkt und der Strohleitrechen (8) nach unten ausschwenkt (Fig. 1 und 3).

Das Rohr (37) des Strohleitrechens (8) hat eine in Schwenkrichtung verlaufende Nut (42) in die ein Stift (43) der Stange (39) eingreift; hierdurch wird die Schwenkbewegung des Rohres (37) mit Zinken (38) nach unten und außen in die Funktionsstellung gem. Fig. 3 begrenzt, in die das Rohr (37) mit Zinken (38) durch das Eigengewicht automatisch zurückschwenkt.

## Patentansprüche

1. Mähdrescher mit einem einer Dresch- und Abscheideeinrichtung nachgeschalteten Strohhäcksler (2), welcher an der Strohhaube (3) über ein Bewegungsorgan (4) in eine Arbeitsstellung (A) und in eine Außerbetriebsstellung (B) verlagerbar ist, und wobei der Strohhäcksler (2) und ein Auswurfstutzen (7) als eine Baueinheit ausgebildet ist, diese Baueinheit an Führungen (5, 6) der Strohhaube verschiebbar lagert und mittels des Bewegungsorganes (4), vorzugsweise einem Druckmittelzylinder, in seine beiden Stellungen (A, B) verfahrbar ist,
**dadurch gekennzeichnet,**
daß die aus Strohhäcksler (2) und Auswurfstutzen (7) bestehende Baueinheit zusätzlich einen Strohleitrechen (8) aufweist und der Auswurfstutzen (7) des Strohhäckslers (2) und/oder der am Strohhäcksler (2) angeordnete Strohleitrechen (8) in Abhängigkeit von der Verschiebebewegung des Strohhäckslers (2) über Kopplungsglieder (9 bis 13) in die Arbeitsstellung (A) und in die Außerbetriebsstellung (B) verschwenkbar sind.

2. Mähdrescher nach einem der Ansprüche 1 bis 4, dadurch gekennzeichnet, daß das Steuer- und Schwenkteil (9) als mehrarmiger Hebel um die an der Profilschiene (6) des Strohhäckslergehäuses (18) ortsfest vorgesehene Achse (19) schwenkbar lagert, einerseits der Achse (19) ein Gabelteil (20) zur Gelenkverbindung der Kolbenstange (4b) des Druckmittelzylinders (4) in einer horizontalen Achse (21) hat, andererseits der Achse (19) eine mit einem Anschlag (22) am Strohhäckslergehäuse (18) in zwei Schwenkstellungen zusammenwirkende Schwenkbegrenzungs- und Mitnahmegabel (23) aufweist und einem in Längsrichtung des Druckmittelzylinders (4) abgehenden hebelförmigen Fortsatz (24) besitzt.

3. Mähdrescher nach einem der Ansprüche 1 bis 5, dadurch gekennzeichnet, daß an dem hebelförmigen Fortsatz (24) des Steuer- und Schwenkteiles (9) ein erster Hebel (10) mit einem Ende in einer horizontalen Schwenkachse (25) angelenkt ist, der mit seinem anderen Ende über eine horizontale Achse (26) mit einer um eine ortsfeste, horizontale Achse (27) am Strohhäckslergehäuse (18) schwenkbar gelagerten Knotenplatte (13) in Gelenkverbindung steht,
an der Knotenplatte (13) ein zweiter Hebel (11) mit einem Ende in einer horizontalen Achse (28) angelenkt ist, der mit seinem anderen Ende verstellbar am Auswurfstutzen (7) des Strohhäckslers (22) angreift,
und an der Knotenplatte (13) in einer horizontalen Achse (29) ein dritter Hebel (12) mit einem Ende Schwenkbar lagert, welcher in seinem anderen Ende eine im Strohhäckslergehäuse (18) drehbar gelagerte Welle (30) aufweist, an der der Strohleitrechen (8) bewegungsstarr befestigt ist.

4. Mähdrescher nach einem der Ansprüche 1 bis 6, dadurch gekennzeichnet, daß das schwenkbare Strohleitblech (15) an der schwenkbaren Knotenplatte (13) befestigt und mit dieser um die horizontale Achse (27) verschwenkbar ist.

5. Mähdrescher nach einem der Ansprüche 1 bis 7, dadurch gekennzeichnet, daß der Auswurfstutzen (7) um die Rotor-Drehachse (31) schwenkbar lagert und sein ihn bewegender Hebel (11) an einem Stellhebel (32) angelenkt ist, welcher an einem am Auswurfstutzen (7) befestigten Lochrasterteil (33) für die Schwenkwinkelgröße des Auswurfstutzens (7) einstellbar festgelegt ist.

6. Mähdrescher nach einem der Ansprüche 1 bis 8, dadurch gekennzeichnet, daß die ortsfeste Achse (27) der Knotenplatte (13) mit den Achsen (26, 28, 29) der drei Hebel (10, 11, 12) auf den Eckpunkten eines Viereckes, vorzugsweise eines Trapezes liegt.

7. Mähdrescher nach einem der Ansprüche 1 bis 9, dadurch gekennzeichnet, daß der Strohleitrechen (8) ein Rohr (37) mit Zinken (38) aufweist, das Rohr (37) um eine an der Welle (30) befestigte Stange (39) in einem begrenzten Winkel verdrehbar lagert und das Rohr (37) mit Zinken (38) durch ein am Strohhäckslergehäuse (18) befestigtes Steuerstück (40) und einem am Rohr (37) angebrachten Anschlag (41) beim Hochschwenken des Strohleitrechens (8) um die Stange (39) zur Mähdreschermitte hin einschwenkbar ist.

8. Mähdrescher nach einem der Ansprüche 1 bis 10, dadurch gekennzeichnet, daß in beiden Seiten des Strohhäckslers (2) je ein Strohleitrechen (8) angeordnet ist und beide Strohleitrechen (8) an einer gemeinsamen, durchgehenden Welle (30) befestigt und durch je einen mit einem Steuerstück (40) zusammenwirkenden Anschlag (41) aufeinanderzu einschwenkbar sind.

9. Mähdrescher nach einem der Ansprüche 1 bis 11, dadurch gekennzeichnet, daß die von der Knotenplatte (13), den drei Hebeln (10, 11, 12) und dem Steuer- und Schwenkteil (9) gebildeten Kopplungsglieder mindestens an einer Seite des Strohhäckslers (2) angeordnet und durch den Druckmittelzylinder (4) betätigbar sind.

## Claims

1. A combine harvester having a chaff cutter (2) which is connected downstream of a threshing and separating device and which is displaceable on the straw hood (3) by way of a motion member (4) into an operative position (A) and into an inoperative position (B), and wherein the chaff cutter (2) and a discharge member (7) are in the form of a structural unit and said structural unit is mounted slidably on guides (5, 6) of the straw hood and is movable into its two positions (A, B) by means of the motion member (4), preferably a pressure fluid cylinder, characterised in that the structural unit comprising the chaff cutter (2) and the discharge member (7) additionally has a chaff guide rake (8) and the discharge member (7) of the chaff cutter (2) and/or the chaff guide rake (8) which is arranged on the chaff cutter (2) are pivotable in dependence on the sliding movement of the chaff cutter (2) by way of coupling members (9 to 13) into the operative position (A) and into the inoperative position (B).

2. A combine harvester according to claim 1 characterised in that the control and pivoting member (9) in the form of a multi-arm lever is mounted pivotably about the axis (19) provided stationarily on the shaped rail member (6) of the chaff cutter housing (18), on one side of the axis (19) it has a fork portion (20) for pivotal connection of the piston rod (4b) of the pressure fluid cylinder (4) in a horizontal axis (21), on the other side of the axis (19) it has a pivotal movement-limiting and entrainment fork (23) co-operating with an abutment (22) on the chaff cutter housing (18) in two pivotal positions, and it has a lever-shaped extension (24) which extends in the longitudinal direction of the pressure fluid cylinder (4).

3. A combine harvester according to claim 1 or claim 2 characterised in that a first lever (10) is pivotably connected by one end at a horizontal pivot axis (25) to the lever-shaped extension (24) of the control and pivoting member (9), the lever (10) being pivotably connected by its other end by way of a horizontal axis (26) to a junction plate (13) mounted pivotably about a stationary horizontal axis (27) on the chaff cutter housing (18),
a second lever (11) is pivotably connected by one end to the junction plate (13) at a horizontal axis (28), said second lever at its other end adjustably engaging the discharge member (7) of the chaff cutter (2), and
a third lever (12) is pivotably mounted by one end to the junction plate (13) at a horizontal axis (29), said third lever in its other end having a shaft (30) which is mounted rotatably in the chaff cutter housing (18) and to which the chaff guide rake (8) is motionally rigidly secured.

4. A combine harvester according to one of claims 1 to 3 characterised in that the pivotable chaff guide plate (15) is secured to the pivotable junction plate (13) and is pivotable therewith about the horizontal axis (27).

5. A combine harvester according to one of claims 1 to 4 characterised in that the discharge member (7) is mounted pivotably about the rotor axis of rotation (31) and its lever (11) moving it is pivotably connected to a control lever (32) which is adjustably fixed to a member (33) having an array of holes and secured to the discharge member (7), for adjusting the magnitude of the angle of pivotal movement of the discharge member (7).

6. A combine harvester according to one of claims 1 to 5 characterised in that the stationary axis (27) of the junction plate (13) lies with the axes (26, 28, 29) of the three levers (10, 11, 12) at the corner points of a quadrilateral, preferably a trapezium.

7. A combine harvester according to one of claims 1 to 6 characterised in that the chaff guide rake (8) has a tube (37) with prongs (38), the tube (37) is mounted rotatably through a limited angle about a bar (39) fixed to the shaft (30) and the tube (37) with prongs (38) can be pivoted in towards the centre of the combine harvester about the bar (39) by a control portion (40) secured to the chaff cutter housing (18) and an abutment (41) mounted to the tube (37) upon upward pivotal movement of the chaff guide rake (8).

8. A combine harvester according to one of claims 1 to 7 characterised in that a respective chaff guide rake (8) is arranged in each of the two sides of the chaff cutter (2) and the two chaff guide rakes (8) are secured to a common continuous shaft (30) and can be pivoted in towards each other by a respective abutment (41) co-operating with a control portion (40).

9. A combine harvester according to one of claims 1 to 8 characterised in that the coupling members formed by the junction plate (13), the three levers (10, 11, 12) and the control and pivoting member (9) are arranged at least at one side of the chaff cutter (2) and are actuable by the pressure fluid cylinder (4).

## Revendications

1. Moissonneuse-batteuse comprenant, à la suite d'un dispositif de battage et de séparation, un hache-paille (2) monté sur la hotte arrière (3) de manière à pouvoir être amené par un organe de déplacement (4), à une position de travail (A) et une position hors service (B) , le hache-paille (2) et une tubulure d'éjection (7) étant regroupés en un ensemble monté mobile en translation sur des guidages (5, 6) de la hotte et pouvant être amené à l'aide de l'organe de déplacement (4), de préférence un vérin à fluide sous pression, à ses deux positions (A, B),
caractérisée par le fait
que l'ensemble comprenant le hache-paille (2) et la tubulure cl'éjection (7) présente, en plus, un peigne guide-paille (8) et que la tubulure d'éjection (7) du hache-paille (2) et/ou le peigne guide-paille (8) disposé sur le hache-paille (2) est (sont) monté(s) pivotant(s) de manière à pouvoir être amené(s) en fonction du mouvement de translation du hache-paille (2), par l'intermédiaire d'éléments de couplage (9 à 13) , par pivotement à la position de travail (A) et à la position hors service (B).

2. Moissonneuse-batteuse suivant l'une des revendications 1 à 4, caractérisée par le fait que l'élément de commande et de pivotement (9), en tant que levier à plusieurs bras, est monté pivotant autour de l'axe (19) fixe sur le rail profilé (6) du carter de hache-paille (18) et présente d'un côté de l'axe (19) une partie-chape (20) pour la liaison articulée avec la tige de piston (4b) du vérin à fluide (4) par un axe horizontal (21), présente de l'autre côté de l'axe (19) une fourche (23) de limitation de pivotement et d'entraînement, coopérant avec une butée (22) sur le carter de hache-paille (18) dans deux positions de pivotement, et comporte un prolongement (24) en forme de levier s'étendant dans la direction longitudinale du vérin à fluide (4).

3. Moissonneuse-batteuse suivant l'une des revendications 1 à 5, caractérisée par le fait que sur le prolongement (24) en forme de levier de l' élément de commande et de pivotement (9) , est articulée par un axe de pivotement (25) horizontal une extrémité d'un premier levier (10) dont l'autre extrémité est articulée, par un axe horizontal (26) , sur une plaque d'articulation (13) montée pivotant autour d'un axe (27) horizontal fixe sur le carter de hache-paille (18) ,
sur la plaque d'articulation (13) est articulée par un axe horizontal (28) une extrémité d'un deuxième levier (11), dont l'autre extrémité agit de façon réglable sur la tubulure d'éjection (7) du hache-paille (2),
et sur la plaque d'articulation (13) est articulée par un axe horizontal (29) une extrémité d'un troisième levier (12) qui porte à son autre extrémité un arbre (30) sur lequel le peigne guide-paille (8) est fixé rigidement et qui est monté en rotation dans le carter de hache-paille (18) .

4. Moissonneuse-batteuse suivant l'une des revendications 1 à 6, caractérisée par le fait que la tôle guide-paille (15) pivotante est fixée à la plaque d'articulation (13) pivotante et pivote avec cette dernière autour de l'axe horizontal (21).

5. Moissonneuse-batteuse suivant l'une des revendications 1 à 7, caractérisée par le fait que la tubulure d'éjection (7) est montée pivotante autour de l'axe de rotation (31) du rotor et le levier (11) qui le déplace est articulé sur un levier de réglage (32) qui peut être positionné de façon réglable sur un élément d'indexage à trous (33) fixé à la tubulure d'éjection (7), pour le réglage de l'angle de pivotement de la tubulure d'éjection (7).

6. Moissonneuse-batteuse suivant l'une des revendications 1 à 8, caractérisée par le fait que l'axe fixe (27) de la plaque d'articulation (13) et les axes (26, 28, 29) des trois leviers (10, 11, 12) sont situés aux angles d'un quadrilatère, de préférence d'un trapèze.

7. Moissonneuse-batteuse suivant l'une des revendications 1 à 9, caractérisée par le fait que le peigne guide-paille (8) présente un tube (37) avec des dents (38), que ledit tube (37) est monté mobile en rotation, sur un angle limité, sur une tige (39) fixée à l'arbre (30) et que le tube (37) à dents (38) pivote vers le milieu de la moissonneuse-batteuse, lors du pivotement vers le haut du peigne guide-paille (8) autour de la tige (39) , sous l'action d'une pièce de commande (40) fixée au carter de hache-paille (18) et d'une butée (41) disposée sur le tube (37) .

8. Moissonneuse-batteuse suivant l'une des revendications 1 à 10, caractérisée par le fait qu'un peigne guide-paille (8) est disposé dans chacun des deux côtés du hache-paille (2) , que les deux peignes guide-paille (8) sont fixés à un arbre commun (30) traversant et peuvent pivoter l'un vers l'autre chacun sous l'action d'une butée (41) coopérant avec une pièce de commande (40).

9. Moissonneuse-batteuse suivant l'une des revendications 1 à 11, caractérisée par le fait que les éléments de couplage formés par la plaque d'articulation (13), les trois leviers (10, 11, 12) et l'élément de commande et de pivotement (9) sont disposés au moins sur un côté du hache-paille (2) et peuvent être actionnés par le vérin à fluide sous pression (4).
